Europäisches Patentamt

European Patent Office

Office européen des brevets

(19)

(11) Veröffentlichungsnummer: **0 217 140**
**B1**

(12) **EUROPÄISCHE PATENTSCHRIFT**

(45) Veröffentlichungstag der Patentschrift:
28.02.90

(21) Anmeldenummer: 86111886.7

(22) Anmeldetag: 27.08.86

(51) Int. Cl.⁴: **G01M 3/32**, G01M 3/36,
B07C 5/34

(54) **Prüfvorrichtung, insbesondere für flaschenförmige Behältnisse sowie Verfahren zum Prüfen derselben.**

(30) Priorität: 04.09.85 CH 3805/85

(43) Veröffentlichungstag der Anmeldung:
08.04.87 Patentblatt 87/15

(45) Bekanntmachung des Hinweises auf die Patenterteilung:
28.02.90 Patentblatt 90/9

(84) Benannte Vertragsstaaten:
AT BE CH DE FR GB IT LI LU NL SE

(56) Entgegenhaltungen:
FR-A- 2 279 086
GB-A- 2 057 689
US-A- 3 716 910

(73) Patentinhaber: Lehmann, Martin, Obere
Farnbühlstrasse 1, 5610 Wohlen 1(CH)

(72) Erfinder: Lehmann, Martin, Obere Farnbühlstrasse 1,
5610 Wohlen 1(CH)

(74) Vertreter: Troesch, Hans Alfred, Dr. Ing. et al,
Walchestrasse 19, CH-8035 Zürich(CH)

## Beschreibung

Die vorliegende Erfindung betrifft ein Verfahren zum Prüfen von Eigenschaften von insbesondere flaschenförmigen Behältnissen sowie eine Prüfanlage zu dessen Durchführung.

Im Zuge der fortwährenden Leistungssteigerung ist man bestrebt, gewisse Vorgänge in immer kürzeren Zeiten ablaufen zu lassen, um damit zeitlich und mithin wirtschaftlich oder monetär einen Vorgang, beispielsweise in der Verpackungsindustrie, immer billiger zu gestalten.

Es hat sich in diesem Sinne gezeigt, dass in der Verpackungsindustrie das Durchführen einzelner Arbeitsgänge nicht nur räumliche, sondern auch zeitliche Ueberbelastungen mit sich bringt, indem die Durchlaufzeit, beispielsweise in der Konservenindustrie, von der Kontrolle des leeren Behältnisses bis zur Kontrolle nach dem Etikettieren, eine zu lange Behandlungsstrecke und eine zu lange Behandlungszeit bedingt.

Die vorliegende Erfindung bezweckt in diesem Sinne die bestehenden Verhältnisse in dem Sinne zu vereinfachen, dass insbesondere mit flüssigem Gut abzufüllende Behältnisse, die vorzugsweise mehrheitlich aus Kunststoff bestehen, überprüft werden können, bevor diese mit dem Gut angefüllt werden, um den Ausschuss, beispielsweise bezüglich Dimensionierung, Stauchfestigkeit, Dichtigkeit u. dgl. vor dem Abfüllvorgang schnell, eindeutig und genau zu lokalisieren bzw. festzuhalten.

Bekanntlich werden bei derartigen Behältnissen, insbesondere Kunststoffflaschen, deren eine Festigkeit mit Hilfe einer Stauchvorrichtung bestimmt. Derartige Prüfmaschinen, welche mit Spindeltrieben oder einfachen, federbelasteten Kolben arbeiten, sind bekannt. Danach wird anschliessend in einer weiteren Maschine beispielsweise die Dichtheit des Behältnisses geprüft.

Auf diese Weise werden nicht nur zwei unterschiedliche Vorrichtungen bzw. Maschinen, sondern auch eine entsprechende Zeit zum Verschieben der Prüflinge und zum Durchführen der entsprechenden Prüfung benötigt.

Es ist ein Prüfkopf zum Feststellen von Undichtheiten und des Widerstandes gegen das Stauchen von Kunststoffflaschen bekannt geworden, bei welchem beide Prüfungen in einem Prüfvorgang durchführbar sind. Bei diesem Prüfkopf werden die Stauchkraft und die Abdichtungskraft zum Prüfen der Dichtheit mit Hilfe mechanisch absenkbarer Kolben/Zylinderaggregate vorgenommen, wobei dessen Teile durch mechanische Federung, im vorliegenden Falle durch Schraubenfedern, miteinander wirkverbunden sind. Diese Federn legen die anzuwendenden Kräfte zum Stauchen bzw. Dichten fest. Diese Art der Prüfung erlaubt ein Feinanpassen dieser Kräfte an die jeweiligen Bedürfnisse nicht, da jeweils die Kraftänderung durch eine Hubänderung der entsprechenden Schraubenfedern vorgenommen werden muss.

Dies ist nicht nur ein mühseliges, zeitraubendes Unterfangen, sondern auch wegen der Individualität jeder einzelnen Feder bezüglich Federcharakteristik zu wenig genau.

Dieser Prüfkopf konnte sich daher in der Praxis nicht durchsetzen. (FR-A 2 279 086)

Es ist ferner eine Prüfvorrichtung bekannt geworden, welche dazu dient, bei Glasbehältnissen den Durchmesser der Füllöffnung und die Dichtheit des Behältnisses gleichzeitig zu prüfen. Auch bei dieser Einrichtung, welche im übrigen eine Stauchprüfung nicht vorsieht, erfolgt das Aufdrücken des pressenden Kopfes auf die Mündung über Schraubenfedern. Die entsprechenden Zylinder- und Kolbenelemente sind ferner handbetätigt. Auch diese Vorrichtung ist nicht geeignet, gewünschte Stauchkräfte und Abdichtkräfte bei zu messenden Behältnissen in engen Grenzen festzulegen und diese Grenzen auf einfachste Weise in grossen Bereichen schnell und sicher ändern zu können. Bei handbetätigten Vorrichtungen stellen sich ja diese Probleme auch nicht. (GB-A- 2 057 689)

Auch die Anlage, wie sie in der US-A- 3 716 910 beschrieben ist, vermag den geschilderten Uebelständen nicht abzuhelfen, da sie den Hergang des Stauchens überhaupt nicht vorsieht, sondern in einer der Stationen eine Dichtungsprüfung sowie eine Prüfung der Abmessungen des Behältnisses vorsieht.

Die vorliegende Erfindung bezweckt diesbezüglich eine Verbesserung, um derartige Prüfungen in jeder Beziehung, d.h. bezüglich Platzbedarf, Zeitbedarf, Maschinenbedarf einfacher zu gestalten.

Das vorliegende Verfahren zum Prüfen von Eigenschaften von insbesondere flaschenförmigen Behältnissen zeichnet sich dadurch aus, dass man zum Prüfen von Eigenschaften das Behältnis im wesentlichen unter Innehaltung des Umgebungsdruckes in dessen Innerem mittels eines pneumatisch bewegten kolbenförmigen, federlosen Organs einem Stauchvorgang unterzieht, wobei man den Gasdruck und damit die gewünschte Stauchkraft einstellen kann.

Eine entsprechende Prüfanlage, insbesondere für flaschenförmige Behältnisse weist mindestens ein Kolben/Zylinderaggregat mit zwei getrennten, federlos wirkverbindbaren, einzeln pneumatisch betätigbaren Kolben auf, wobei Einstellmittel vorgesehen sind, um den Gasdruck und damit die Stauchkraft und/oder den Dichteprüfdruck zu ändern.

Die Erfindung wird anschliessend beispielsweise anhand einer Zeichnung erläutert.

Es zeigen:

Fig. 1 den schematischen Aufbau einer Prüfanlage zum Prüfen der Stauchfestigkeit und zum Prüfen der Dichtigkeit von aus Kunststoff hergestellten Flaschen,

Fig. 2 einen Achsialschnitt durch eine Prüfvorrichtung, wie sie in einer Anlage gemäss Fig. 1 verwendet wird.

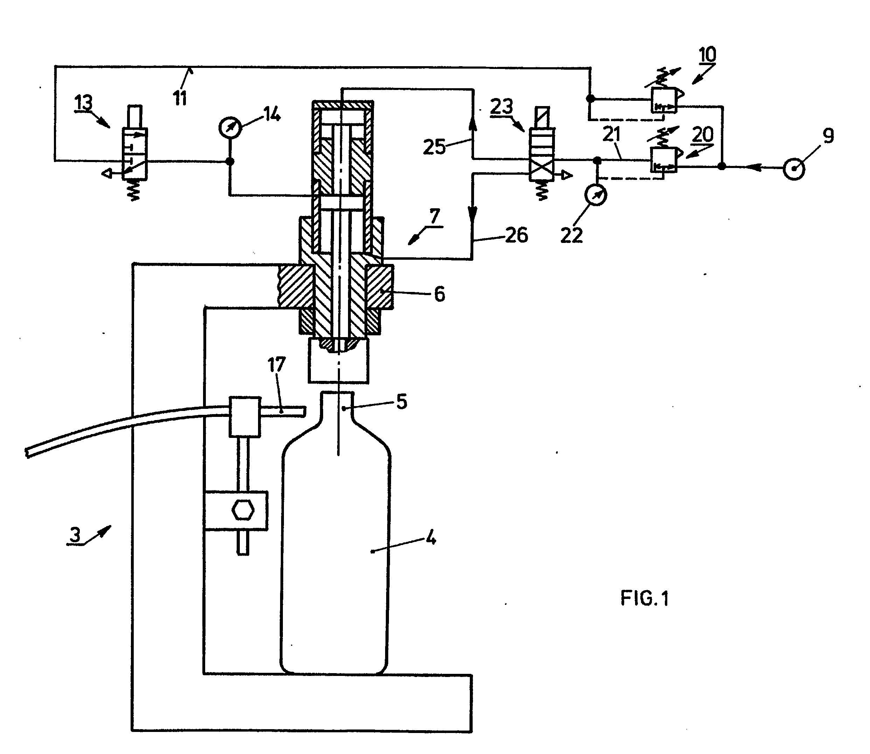

In Fig. 1 ist eine Prüfanlage für das Prüfen von aus Kunststoff bestehenden flaschenförmigen Behältnissen dargestellt. In einem Prüfjoch 3, welches an einer drehenden oder linear bewegten Zuführstrasse angeordnet sein kann, ist ein Prüfling, in Form einer Flasche 4, ersichtlich. Es handelt sich um eine einfache Flasche mit einem Flaschenhals 5.

Im oberen Jocharm 6 des Prüfjochs 3 ist eine Prüfvorrichtung 7 befestigt. Diese Vorrichtung ist als Kolben/Zylinder-Aggregat ausgebildet. Die Betätigung dieser Prüfvorrichtung 7 erfolgt mittels Druckluft, wobei im Schema ein Druckluftanschluss 9 mit einem Druckregler 10 zum Regeln des für die Bestimmung der Stauchfestigkeit der Flasche 4 benötigten Luftdruckes vorgesehen ist. Die auf diese Weise geregelte Druckluft gelangt über eine Versorgerleitung 11 zu einem 3/2-Wegeventil 13, welches so schaltbar ist, dass die anschliessende, ein Manometer 14 enthaltende Leitung entweder mit Druckluft gespiesen oder aber von der Prüfvorrichtung 7 her Auspuff-Luft in die Atmosphäre abbläst. Diese Abblasstellung ist in Fig. 1 ersichtlich.

Zur Anlage gehört ferner ein Grenztaster 17, welcher dann in Funktion tritt, wenn die Flasche 4, auf deren Hals 5 ein achsialer Druck ausgeübt wird, die verlangte Stauchfestigkeit nicht aufweist und daher der entsprechende Teil der Prüfvorrichtung 7 absinkt und somit diesen Grenztaster 17 betätigt. Der auf diese Weise angesprochene Grenztaster 17 sorgt dafür, dass im weiteren Bewegungsablauf die entsprechende Flasche 4 als Ausschuss weggeleitet wird.

In einer, zur Versorgerleitung 11 parallelen Leitung befindet sich ein Druckregler 20 zum Regeln des einstellbaren Dichteprüfdruckes, mit welchem die Flasche 4 in anschliessend erläuterter Weise beaufschlagt wird. Eine Versorgerleitung 21 führt zu einem Manometer 22 und zu einem 4/2-Wegeventil 23. Der eine Anschluss dieses Ventils 23 dient dem Anbringen einer Versorgerleitung 25 zur Vornahme des Verschliessens der Flasche für deren Dichtheitsprüfung mittels Druckluft, während die zweite Versorgerleitung 26 für die Rückführung der Prüfvorrichtung in ihre Ausgangslage die Druckluft liefert.

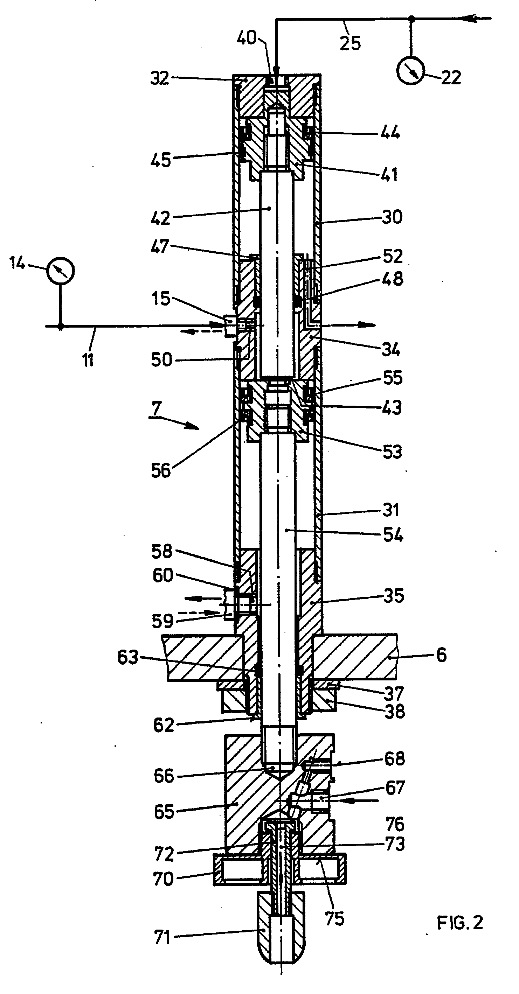

Die in Fig. 2 in vergrössertem Massstab dargestellte Prüfvorrichtung 7 umfasst einen oberen Zylindermantel und einen unteren 31. Der obere Zylindermantel 30 ist mittels eines Zylinderdeckels 32 abgeschlossen. Die beiden Zylindermäntel 30 und 31 sind über einen Verbindungsnippel 34 miteinander verschraubt. Der untere Zylindermantel 31 ist mittels eines Zylinderabschlussnippels 35 abgeschlossen. Das Ende dieses Nippels 35 ist mit einem Gewinde versehen, so dass die Vorrichtung 7 mit Hilfe eines Befestigungsringes 37 und eines Sicherungsringes 38 im oberen Jocharm 6 befestigt werden kann.

Der Zylinderdeckel 32 ist mit einer mittigen Druckluftanschlussbohrung 40 versehen. Sie führt ins Innere des Zylindermantels 30, in welchem ein oberer Kolben 41 verschiebbar angeordnet ist. Der Kolben 41 ist mit einer inneren Kolbenstange 42 mit einer freien Endfläche 43 versehen. Der Kolben 41 ist mittels eines Lippendichtungsringes 44 und eines O-Ringes 45 bezüglich des Zylindermantels 30 abgedichtet. Die Kolbenstange 42 läuft in einer oberen Führungsbuchse 47, die im Verbindungsnippel 34 eingeführt und mit einer O-Ringdichtung 48 versehen ist. Eine seitlich im Verbindungsnippel 34 angeordnete Druckluftbohrung 50 ist mit einem Anschlussnippel 51 versehen, durch welchen Druckluft aus der Versorgerleitung 11 zugeführt werden kann. Der Verbindungsnippel 34 weist ferner eine Entlüftungsbohrung 52 auf, die in den Zylinderraum des oberen Zylindermantels 30 mündet.

Unterhalb des Verbindungsnippels 34 ist ein unterer Kolben 53 mit einer Kolbenstange 54 vorgesehen, welcher Kolben 53 mit zwei Lippendichtungsringen 55 und 56 ausgerüstet ist.

Der Zylinderabschlussnippel 35 weist eine seitliche Druckluftbohrung 58 mit einem Nippel 59 auf, der mittels eines O-Ringes 60 abgedichtet ist. Die Kolbenstange 54 ist in einer unteren Führungsbuchse 62 mit einer O-Ringdichtung 63 im Zylinderabschlussnippel 35 geführt.

Das untere Ende der Kolbenstange 54 ist als Gewindezapfen ausgebildet, welcher dem Festhalten eines Anschlußkopfes 65 dient, in dessen Gewindebohrung 66 der Gewindezapfen eingeschraubt ist. Seitlich sind im Kopf 65 zwei Bohrungen, eine Druckluftbohrung 67 und eine Anschlußbohrung für ein Manometer 68 radial verlaufend. Die beiden Bohrungen sind durch eine Längsbohrung miteinander verbunden. Diese Längsbohrung mündet ihrerseits in eine untere Gewindebohrung des Anschlußkopfes 65. Sie dient der Aufnahme einer Abschlußkappe 70, welche ihrerseits eine Hülse 72 mit einer Längsbohrung 73 mit Hilfe eines Gewindezapfens 76 festhält, so daß, was für die Dichteprüfung nötig ist, die Druckluftbohrung 67 über die Längsbohrung 73 der Hülse 72 Luft in eine mittige Öffnung eines Kaliber-Meßkopfes 71 führen kann. Eine innere Dichtungsfläche 75 ist, z.B. bei Vornahme der Dichtigkeitsprüfung, zum Aufliegen auf dem Abschlußrand des Flaschenhalses 5 vorgesehen.

Soll die Flasche 4 einer Dichtigkeitsprüfung unterzogen werden, so wird das Ventil 23 so gestellt, dass die Druckluft durch die Versorgerleitung 25 und die Druckluftanschlussbohrung 40 auf die freie Stirnfläche des oberen Kolbens 41 gelangt und diesen nach unten bewegt. Dabei stösst das freie Ende der Kolbenstange 72 mit der Fläche 43 auf die freie Fläche des unteren Kolbens 53, so dass sie diesen mitsamt seiner Kolbenstange 54 und den an dieser befestigten Teilen nach unten stösst. Dabei gelangt der Kaliber-Messkopf 71 in den Flaschenhals 5 und prüft dessen Durchgang. Anschliessend gelangt die Abschlusskappe 70 mit ihrer Dichtungsfläche 75 auf den oberen Rand des Flaschenhalses 5. Während dieser Bewegung ist der obere Kolben 41 in seine untere Anschlaglage gelangt. In dieser Lage liegt die Dichtungsfläche 75 mit einem vorbestimmten einstellbaren Druck auf der freien Kante des Flaschenhalses 5 auf, so dass der Innenraum der Flasche nach aussen abgedichtet ist. Durch entsprechende Steuerung gelangt nun Druckluft durch die Bohrungen 67 und 73 ins Innere der Flasche und diese wird mit Luft gefüllt, wobei der Enddruck eine vorbestimmte Zeit gehalten werden muss, damit die Flasche als dicht bewertet werden kann. Eine entsprechende Steuerung sorgt für das Ausscheiden undichter Flaschen. Diese an und für sich bekannten Steuerungen bilden nicht Gegenstand der vorliegenden Erfindung und werden daher im einzelnen nicht erläutert.

Zum Prüfen des Stauchwiderstandes der Flasche 5 gelangt entsprechend komprimierte Luft über die Versorgerleitung 11 und den Nippel 15 sowie die Bohrung 50 ins Innere des Verbindungsnippels 34, wo sie auf die der Fläche 43 gegenüberliegende freie Kolbenfläche des unteren Kolbens 53 wirkt und diesen nach unten drückt. Bei dieser Bewegung gelangt, wie bei der Dichtigkeitsprüfung, wiederum die Dichtungsfläche 75 der Abschlußkappe 70 zum Aufliegen auf den Rand des Flaschenhalses 5. Dabei ist die auf den Flaschenrand ausgeübte, in Richtung der Längsachse der Flasche 4 wirkende Kraft bedeutend höher als die zum Dichten benötigte. Auf diese Weise wird die Flasche ohne weitere Maßnahmen einer Stauchprüfung unterzogen. Ist die Ausführung der Flasche einwandfrei, so hält sie diesem Stauchdruck stand. Ist die Flasche fehlerhaft, beispielsweise wegen zu schwacher Wandstärke oder unregelmäßig verteilter Wanddicke u. dgl., so hält sie der Kraft, welche auf sie ausgeübt wird, nicht stand und knickt ein. Bedingt durch den entsprechend großen Hub des unteren Kolbens 53 gelangt beim Einknicken der Flasche 5 die Abschlußkappe 70 mit dem Grenztaster 17 in Berührung und betätigt, wie erläutert, die Ausschußregelung.

Zum Rückführen der beiden Kolben 41 und 53 wird die Versorgerleitung 26 mit Druckluft beaufschlagt (Schaltung gemäß Fig. 1), welche den Kolben 53 und vor sich herschiebend, die Kolbenstange 42 mit dem Kolben 41 in die oberen Anschlaglagen gemäß Fig. 2 zurückführt. Dabei wird der entsprechende Zylinderraum durch die Bohrung 50 entlüftet, indem durch Umschaltung das Ventil 13, wie in Fig. 1 ersichtlich, auf "Auspuff" umgestellt ist. Entsprechend wird Luft durch die Leitung 25 durch das Ventil 23, wie ersichtlich, in die Atmosphäre ausgestossen. Um Unterdruckbildung im oberen Zylinderraum zu verhüten, strömt durch die Entlüftungsbohrung 52 Luft aus der Atmosphäre ins Zylinderinnere.

Dichteprüfung und Stauchprüfung können in beliebiger Weise frei wählbar nacheinander oder miteinander durchgeführt werden. Um die Unabhängigkeit der beiden Prüfungen sicherzustellen, ist daher der Hub des oberen Kolbens 41 kleiner, beispielsweise um 20 mm, als derjenige des unteren Kolbens 53. Dabei ist grundsätzlich festzuhalten, dass das Mass der Stauchkraft, welche als Grenzkraft einzusetzen ist, bei innerem Ueberdruck in der Flasche, d.h. bei gleichzeitiger Ausführung der Dichtigkeitsprüfung, höher sein muss als bei herrschendem Normaldruck in der Flasche. Diesem Umstand kann aber durch entsprechendes Einstellen der Drucke zur Betätigung der Kolben Rechnung getragen werden.

Sollen die beiden Prüfungen nacheinander durchgeführt werden, beispielsweise zuerst der Stauchvorgang und dann der Dichtigkeitsprüfvorgang, so muss nach Durchführung des Stauchvorganges der Stauchkolben entlastet werden, was durch die in Fig. 1 ersichtliche Schaltung des Ventils 13 erfolgt.

Wenn bei der Stauchprüfung die Flasche 4 der Stauchkraft widerstehen kann, so wird nach Ablauf der Stauchdruckprüfzeit der Kolben 53 entlastet, wobei gegebenenfalls nur noch die Anpresskraft gemäss Belastung des oberen Kolbens 41 für das Schliessen der Flasche 4 und die Durchführung der Dichtigkeitsprüfung auf jene wirkt.

Es können demnach weitere Funktionsprüfungen, insbesondere auch andere Prüfungen, wie das Halten der Flasche für deren Bedrucken, eine Höhenkontrolle der Flasche u. dgl. durchgeführt werden. Die Reihenfolge der vorzunehmenden Prüfungen bzw. Funktionen kann frei gewählt werden, wobei es grundsätzlich möglich ist, durch Anordnung weiterer Kolben andere zusätzliche Funktionen an der Flasche 4 vorzunehmen.

Diese kombinierte Anlage mit der Prüfvorrichtung im Sinne des Aufbaus der Prüfvorrichtung 7 ist insbesondere für Hochleistungsmaschinen sehr geeignet, beispielsweise für Prüfkarusselle, da hier pro Prüfstation mit einer Zeitkaskade die Prüfungen hintereinander und/oder miteinander schaltbar sind, ohne einer zusätzlichen Bewegung des Zylinders der Prüfvorrichtung und des zu prüfenden Behältnisses.

Bei einer Karussell-Prüfmaschine, auch als Prüfrad bezeichnet, mit vier und mehr Prüfstationen, wird der Maschinenbau mit dieser Vorrichtung wesentlich vereinfacht. Es ist natürlich auch möglich, nur einzelne der vorgesehenen Prüfmöglichkeiten durchzuführen, eine Auswahl, die am entsprechenden Schalt- und Wählpult zu treffen ist.

## Patentansprüche

1. Verfahren zum Prüfen von Eigenschaften von insbesondere flaschenförmigen Behältnissen, dadurch gekennzeichnet, dass man zum Prüfen von Eigenschaften das Behältnis (4) im wesentlichen unter Innehaltung des Umgebungsdruckes in dessen Innerem mittels eines pneumatisch bewegten kolbenförmigen, federlosen Organs (53) einem Stauchvorgang unterzieht, wobei man den Gasdruck und damit die gewünschte Stauchkraft einstellen (10) kann.

2. Verfahren nach Anspruch 1, dadurch gekennzeichnet, dass man zum Dichteprüfen das kolbenförmige erste Organ (53) dichtend auf die Behältnisöffnung aufsetzt und den Weg sowie den Abhebedruck dieses ersten Organs (53) vom Behältnis mittels eines zweiten kolbenförmigen, pneumatisch betätigten Organs (41) festlegt und dass man anschliessend das Behältnis (4) unter innern Druck (67) setzt und dessen Konstanthaltung als positives Dichtekriterium bewertet.

3. Verfahren nach Anspruch 1 oder 2, dadurch gekennzeichnet, dass man bei Belassung des Behältnisses am Standort sowohl die Stauch- als auch die Dichteprüfung durchführt.

4. Prüfanlage zur Durchführung des Verfahrens nach Patentanspruch 1, dadurch gekennzeichnet, dass sie mindestens ein Kolben/Zylinderaggregat mit zwei getrennten, federlos wirkverbindbaren, einzeln pneumatisch betätigbaren Kolben (41, 53) aufweist, wobei Einstellmittel (10, 20) vorgesehen sind, um den Gasdruck und damit die Stauchkraft und/oder den Dichtprüfdruck zu ändern.

5. Anlage nach Anspruch 4, dadurch gekennzeichnet, dass sie zwei koaxiale Kolben (41, 53) aufweist, welche vorzugsweise in einem getrennte Zylinderräume aufweisenden gemeinsamen Zylinder (30, 31) angeordnet sind.

6. Anlage nach Anspruch 4 oder 5, dadurch gekennzeichnet, dass die beiden Kolben (41, 53) über mindestens eine Kolbenstange (42) wirkverbindbar sind.

7. Anlage nach einem der Ansprüche 1 bis 6, dadurch gekennzeichnet, dass die Kolbenhublängen ungleich sind, insbesondere der dem Behältnis (4) nähere Kolben (53) den längeren Hub aufweist.

## Claims

1. Method for testing the properties of in particular bottle-shaped containers, characterised in that to test the properties the container (4) is subjected to a compression process while substantially maintaining the ambient pressure in the interior thereof by means of a pneumatically-moved, piston-like, springless member (53), it being possible to adjust (10) the gas pressure and hence the desired compression force.

2. Method according to Claim 1, characterised in that for leakage testing the piston-like first member (53) is sealingly placed over the opening of the container and the path and the lifting-up pressure of said first member (53) from the container is fixed by means of a second piston-like, pneumatically operated member (41), and that the container (4) is then placed under internal pressure (67) and the stabilisation thereof is evaluated as a positive sealing criterion.

3. Method according to Claim 1 or 2, characterised in that both the compression and the leakage tests are performed when the container is left at its location.

4. Testing installation for performing the method according to patent claim 1, characterised in that it has at least one piston/cylinder unit having two separate pistons (41, 53) which can be actively connected without a spring and are individually pneumatically operable, adjusting means (10, 20) being provided to alter the gas pressure and hence the compression force and/or the leakage test pressure.

5. Installation according to Claim 4, characterised in that it has two coaxial pistons (41, 53) which are preferably disposed in a common cylinder (30, 31) having separate cylinder chambers.

6. Installation according to Claim 4 or 5, characterised in that the two pistons (41, 53) can be actively connected by at least one piston rod (42).

7. Installation according to one of Claims 1 to 6, characterised in that the lengths of piston stroke are not equal, in particular that the piston (53) which is closer to the container (4) has the longer stroke.

## Revendications

1. Procédé pour le contrôle de caractéristiques de récipients, en particulier en forme de bouteille, caractérisé en ce que pour contrôler les caractéristiques, on soumet le récipient (4) à un processus de compression, essentiellement en maintenant la pression ambiante dans sa partie intérieure au moyen d'un organe sans ressort (53) en forme de piston et mû pneumatiquement, étant précisé que l'on peut régler (10) la pression de gaz et par conséquent la force de compression désirée.

2. Procédé selon la revendication 1, caractérisé en ce que pour contrôler l'étanchéité, on applique d'une manière étanche sur l'ouverture du récipient, le premier organe (53) en forme de piston et on détermine la course, ainsi que la pression de relevage pour décoller ce premier organe (53) du récipient au moyen d'un second organe (41) en forme de piston et actionné pneumatiquement, et en ce qu'ensuite on place le récipient (4) sous pression interne (67) et on évalue le maintien de cette pression à une valeur constante comme critère positif d'étanchéité.

3. Procédé selon la revendication 1 ou 2, caractérisé en ce que l'on exécute aussi bien le contrôle de compression que le contrôle d'étanchéité sans déplacer le récipient.

4. Installation de contrôle pour la mise en œuvre du procédé selon la revendication 1, caractérisée en ce qu'elle comporte au moins un ensemble de pistons/cylindre présentant deux pistons distincts (41, 53) pouvant être reliés d'une manière fonctionnelle sans ressort et être actionnés pneumatiquement individuellement, étant précisé que des moyens de réglage (10, 20) sont prévus pour modifier la pression de gaz et par conséquent la force de compression et/ou la pression de contrôle d'étanchéité.

5. Installation selon la revendication 4, caractérisée en ce qu'elle présente deux pistons coaxiaux (41, 53) qui sont de préférence disposés dans un cylindre commun (30, 31) présentant des chambres cylindriques distinctes.

6. Installation selon la revendication 4 ou 5, caractérisée en ce que les deux pistons (41, 53) peuvent être reliés d'une manière fonctionnelle par l'intermédiaire d'au moins une tige de piston (42).

7. Installation selon l'une des revendications 1 à 6, caractérisée en ce que les longueurs de course des pistons sont inégales, le piston (53) le plus proche du récipient (4) en particulier présentant la course la plus longue.

FIG.1

FIG. 2